# EUROPEAN PATENT APPLICATION

(11) **EP 2 098 941 A1**
(43) Date of publication of application: **09.09.2009**
(21) Application number: 08004181.7
(22) Date of filing: 06.03.2008
(51) Int. Cl.: G06F 1/18

(54) **Computer apparatus**

(71) Applicant: Silver-Stone Technology Co., Ltd., Zhonghe City T'ai pei County 235 (TW)
(72) Inventor: Chi, Yen-Shu, Zhonghe City, Taipei County 235 (TW)
(74) Representative: Urner, Peter

(57) **Abstract**

A computer apparatus includes a chassis and a motherboard. The chassis includes a top panel with a plurality of openings formed thereon. The motherboard is mounted inside the chassis and includes a plurality of I/O port connectors respectively exposed through the openings. This invention facilitates the operation of establishing connection between the I/O port connectors and peripheral devices.

## Description

### BACKGROUND OF THE INVENTION

### 1. Field of the Invention

The present invention relates to a computer apparatus, and more particularly relates to an assembly of computer chassis and motherboard.

### 2. Description of Related Art

A computer apparatus usually includes a chassis to contain and shield a motherboard. The chassis may consist of a frame and a plurality of covering panels mounted on the frame. Usually, the motherboard includes a plurality of input/output (I/O) port connectors and a plurality of expansion sockets for accommodating expansion cards therein. Each expansion card also includes at least one I/O port connector. These I/O port connectors, for examples, include a VGA port connector, a DVI port connector, a RS232 port connector, a PS/2 port connector or a USB port connector.

In the computer apparatus, connections need to be established between those I/O port connectors and peripheral devices such as a monitor, a TV, a printer, a mouse or a USB flash drive. To this end, a plurality of slots are provided for exposing those I/O port connectors, and the slots are generally formed on the rear side panel of the chassis. Therefore, peripheral devices could be connected to those I/O port connectors through these slots.

However, in above-mentioned computer apparatus, a user has to move himself or the computer to an appropriate position when he wants to directly view those slots on the rear side panel. In this way, he can perform the connections between the I/O port connectors and peripheral devices easily. Hence, it's a topic to the computer designer to study how to make the performing of connections more convenient for the user.

### SUMMARY OF THE INVENTION

It is the object of the present invention to a computer apparatus which has the advantage of easily performing of connections between the I/O port connectors and peripheral devices.

Accordingly, the invention provides a computer apparatus. The computer apparatus includes a chassis and a motherboard. The chassis includes a top panel with a plurality of openings formed thereon. The motherboard is mounted inside the chassis and includes a plurality of I/O port connectors respectively exposed through the openings.

In the other aspect, the invention provides a computer apparatus. The computer apparatus includes a chassis and a motherboard. The chassis includes a top panel with a recess portion formed thereon. The motherboard is mounted inside the chassis and includes a plurality of I/O port connectors protruded through the recess portion.

In the other aspect, the invention provides a computer apparatus. The computer apparatus includes a chassis, a motherboard and an expansion card. The chassis includes a top panel with a recess portion formed thereon. The motherboard is mounted inside the chassis and includes a plurality of primary I/O port connectors and a plurality of expansion sockets. The primary I/O port connectors respectively protrude through the recess portion. The expansion card is accommodated in the expansion socket and includes at least one secondary I/O port connector protruded through the recess portion.

This invention provides the computer apparatus with the openings formed on the top panel of the chassis so as to make the performing of connections between the I/O port connectors and peripheral devices become much easier to a user.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows a perspective view of a computer apparatus according to the first embodiment of the present invention;

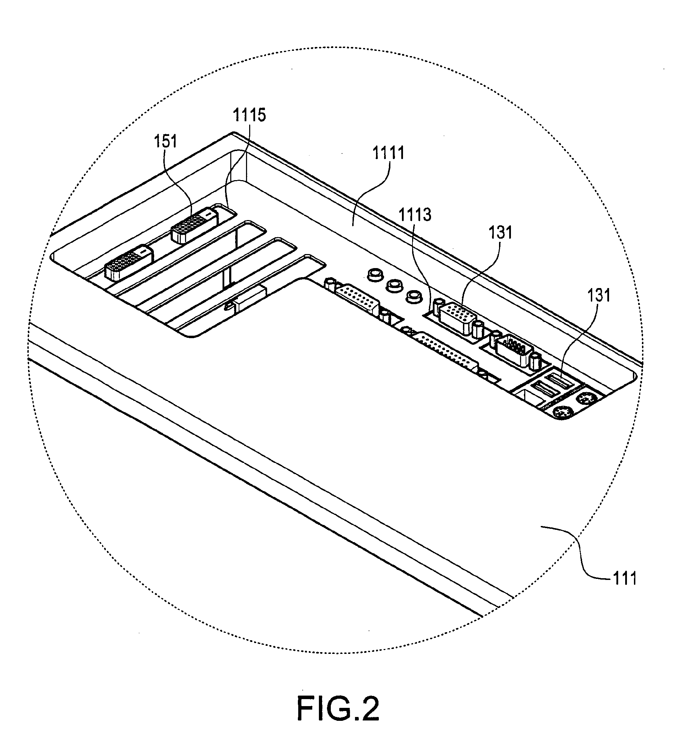

Fig. 2 shows an enlarged view of the computer apparatus in Fig.1;

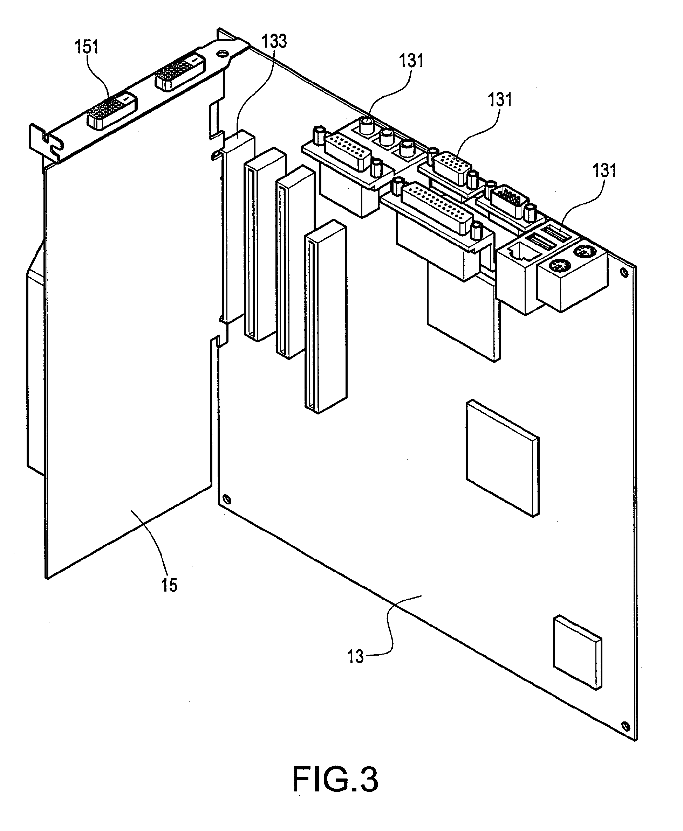

Fig. 3 shows a perspective view of a motherboard electrically connected with an expansion card;
Fig. 4 shows a perspective view of a computer apparatus according to the second embodiment of the present invention;
Fig. 5 shows a perspective view of a dust proof cover of the computer apparatus in an opened position; and
Fig. 6 shows a perspective view of a computer apparatus according to the third embodiment of the present invention.

### DETAILED DESCRIPTION OF THE INVENTION

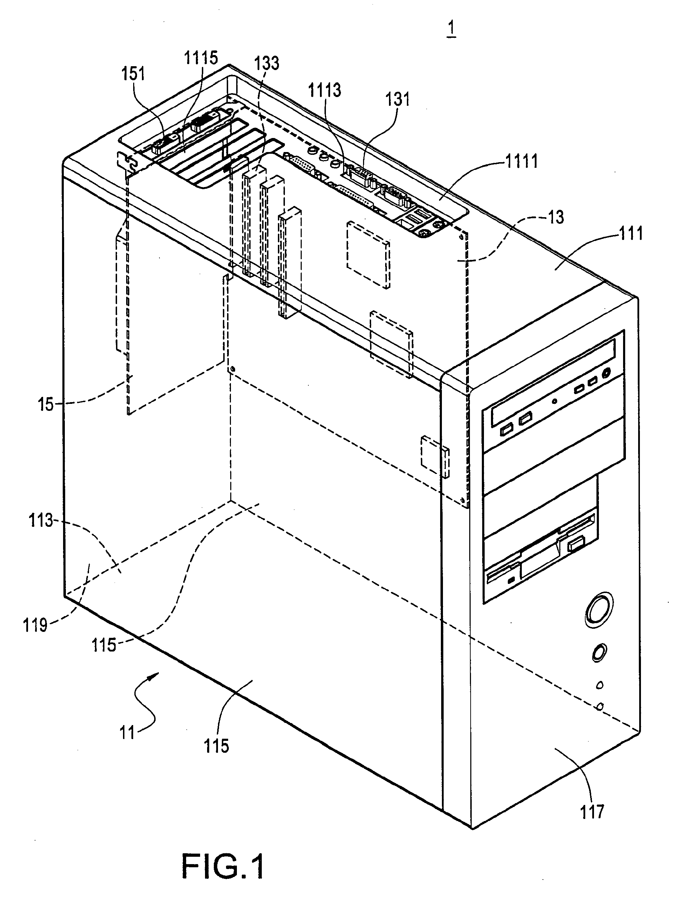

Fig. 1 shows the first embodiment of a computer apparatus of the present invention. The computer apparatus mainly includes a chassis 11 and a motherboard 13.

The chassis 11 includes a frame (not shown), a top panel 111 and a bottom panel 113 respectively mounted on the top side and the bottom side of the frame, a pair of lateral panels 115 mounted on the two opposite lateral sides of the frame, and a front panel 117 and a rear panel 119 respectively mounted on the front side and the rear side of the frame.

A recess portion 1111 is concavely formed on the top panel 111 and is of L-shaped. A plurality of openings 1113 and a plurality of slots 1115 are formed in the recess portion 1111.

The motherboard 13 is mounted inside the chassis 11 and is substantially parallel to one of the lateral panel 115. The motherboard 13 includes a plurality of primary I/O port connectors 131, which respectively protrudes a partial portion thereof through those openings 1113 in the recess potion 1111 of the top panel 111. Those primary I/O port connectors 131 may include a USB port connector, a PS/2 port connector, a RS232 port connector, a VGA port connector, a DVI port connector or an earphone/microphone port connector. Besides, the motherboard 13 also includes a plurality of expansion sockets 133.

Additionally, in this embodiment, the computer apparatus also includes an expansion card 15 accommodated in one of the expansion socket 133 of the motherboard 13. The expansion card 15 has at least one secondary I/O port connector 151 which respectively partially protruded through one of the slots 1115 in the recess potion 1111 of the top panel 111.

For performing connections between those I/O port connectors 131,151 and peripheral devices (not shown, such as a monitor, a TV, a printer, a mouse, a USB flash drive, an earphone or a microphone), a user can easily and directly view those the I/O port connectors 131,151 exposed through those openings 1113 and slots 1115 on the top panel 111. This facilitates the operation to establish connections between the I/O port connectors 131,151 and peripheral devices.

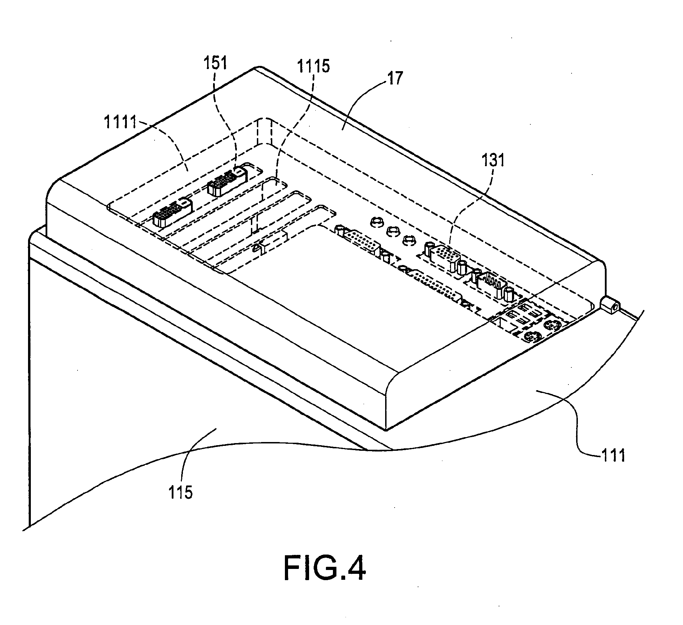

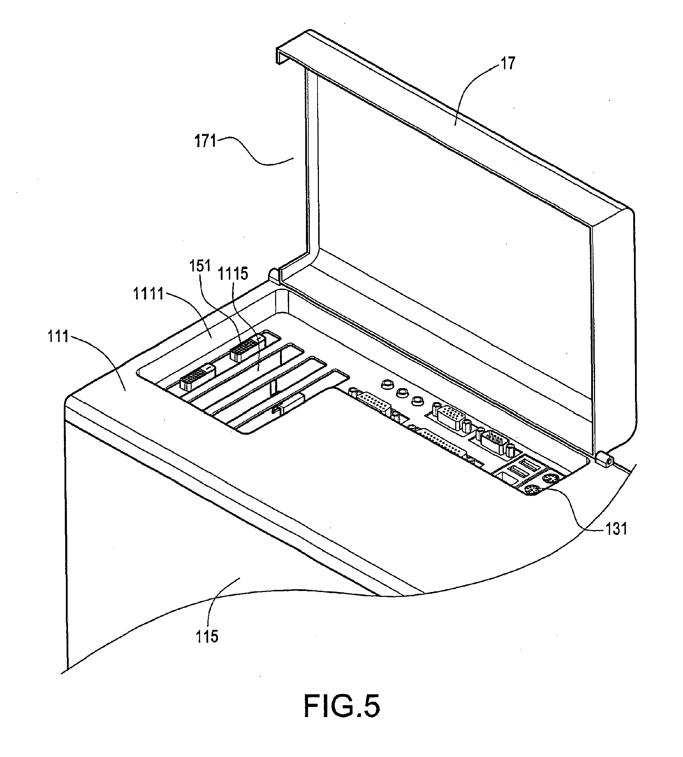

In the second embodiment of the present invention, as Fig.4 and Fig.5 show, the computer apparatus further includes a dust proof cover 17 pivotly attached on the top panel 111. The dust proof cover 17 is correspondingly arranged on the recess portion 1111 of the top panel 111 to prevent dusts or particles from entering the recess portion 1111, so as to avoid affecting the connecting performance of the I/O port connectors 131,151 or the operation of the motherboard 13. A wire outlet aperture 171 is formed on the dust proof cover 17 and is adj acent to the rear panel 119. The wire outlet aperture 171 is provided as a passageway for the wires to connect with the I/O port connectors 131,151 and peripheral devices, when the dust proof cover 17 is closed.

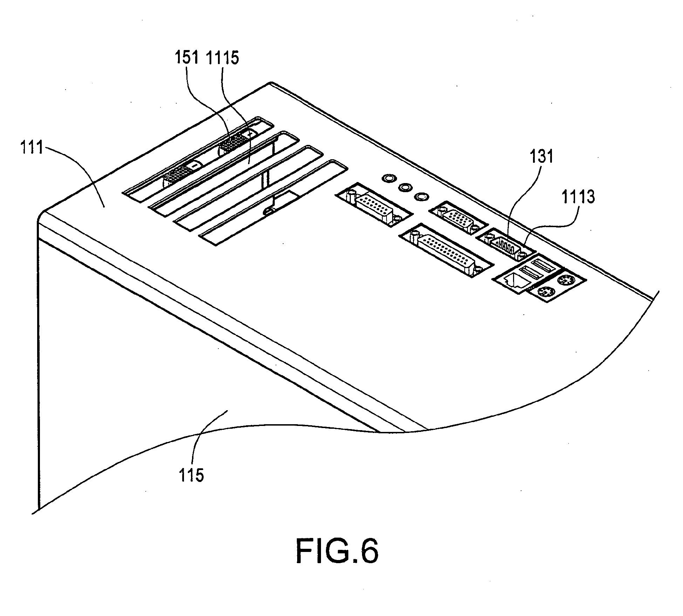

Fig. 6 shows the third embodiment of present invention, the difference between the computer apparatus in Fig.6 and the computer apparatus in Fig.1 is that no recess portion is formed on the top panel 111 of the computer apparatus in Fig.6. Those I/O port connectors 131 and151 respectively protrude through the openings 1113 and the slots 1115 formed on the top panel 111. Alternatively, those I/O port connectors 131,151 may be exposed but not protrude through the openings 1113 and the slots 1115.

Consequently, the present invention indeed makes the performing of connections between the I/O port connectors 131,151 and peripheral devices much easier to a user.

## Claims

1. A computer apparatus (1), comprising:
a chassis (11) comprising a top panel (111) with a plurality of openings (1113) formed thereon; and
a motherboard (13) mounted inside the chassis (11), the motherboard (13) comprising a plurality of primary I/O port connectors (131) respectively exposed through the openings (1113).

2. The computer apparatus (1) in claim 1, wherein a plurality of slots (1115) is formed on the top panel (111) , the computer apparatus (1) further comprises an expansion card (15) connected with the motherboard (13) , and the expansion card (15) comprises at least one secondary I/O port connector (151) exposed through one of the slots (1115).

3. The computer apparatus (1) in claim 2, further comprising a dust proof cover (17) pivotly attached on the top panel (111) , wherein a recess portion (1111) for locating the openings (1113) and the slots (1115) is formed on the top panel (111) and the dust proof cover (17) is correspondingly arranged on the recess portion (1111).

4. The computer apparatus (1) in claim 3, wherein a wire outlet aperture (171) used for passing a wire connected to the secondary I/O port connector (151) is formed on the dust proof cover (17).

5. The computer apparatus (1) in claim 1, further comprising a dust proof cover (17) pivotly attached on the top panel (111) , wherein a recess portion (1111) for locating the openings (1113) is formed on the top panel (111) and the dust proof cover (17) is correspondingly arranged on the recess portion (1111).

6. The computer apparatus (1) in claim 5, wherein a wire outlet aperture (171) used for passing a wire connected to the primary I/O port connector (131) is formed on the dust proof cover (17).

7. The computer apparatus (1) in claim 1, wherein the primary I/O port connectors (131) comprise a USB port connector.

8. The computer apparatus (1) in claim 1, wherein the primary I/O port connectors (131) comprise a PS/2 port connector.

9. The computer apparatus (1) in claim 1, wherein the primary I/O port connectors (131) comprise an RS232 port connector.

10. The computer apparatus (1) in claim 1, wherein the primary I/O port connectors (131) comprise a VGA port connector.

11. The computer apparatus (1) in claim 1, wherein the primary I/O port connectors (131) comprise a DVI port connector.

12. The computer apparatus (1) in claim 1, wherein the primary I/O port connectors (131) comprise an earphone port connector or a microphone port connector.
